# FASCICULE DE BREVET EUROPEEN

(11) **EP 3 601 763 B1**
(45) Date de publication et mention de la délivrance du brevet: **19.01.2022**
(21) Numéro de dépôt: 18712473.0
(22) Date de dépôt: 19.03.2018
(51) Int. Cl.: F02B 77/04, F02B 77/08

(54) **AMÉLIORATION D'UNE INSTALLATION DE NETTOYAGE D'UN MOTEUR À COMBUSTION INTERNE**
VERBESSERTE REINIGUNGSANLAGE FÜR EINE BRENNKRAFTMASCHINE
IMPROVED CLEANING INSTALLATION FOR AN INTERNAL COMBUSTION ENGINE

(30) Priorité: 20.03.2017 FR 1770269
(43) Date de publication de la demande: 05.02.2020
(73) Titulaire: Flex Fuel - Energy Development, 06560 Valbonne (FR)
(72) Inventeur: LE POLLES, Sébastien, Alain, 77690 Montigny-sur-Loing (FR)
(74) Mandataire: INNOV-GROUP
(86) Numéro de dépôt international: PCT/IB2018/051818
(87) Numéro de publication internationale: WO 2018/172907

(56) Documents cités:
- EP-A1- 3 023 613
- EP-A1- 3 064 740
- DE-A1-102015 110 970
- US-A- 2 201 774
- US-A1- 2009 133 718

## Description

### Domaine technique et état de l'art

L'invention concerne une installation de nettoyage d'un système de motorisation comprenant un moteur à combustion interne, installation du type comprenant un dispositif d'injection agencé pour injecter un fluide nettoyant sur une entrée du moteur tournant. L'invention est notamment intéressante pour l'entretien des véhicules à moteur, tels que automobiles, motos, bateaux, ...., mais également pour l'entretien de moteurs industriels tels que ceux utilisés pour la production d'énergie, ....

Pour optimiser le fonctionnement d'un système de motorisation, on cherche souvent à abaisser la température de combustion et à avoir un rapport stœchiométrique air/combustible optimal disponible à l'intérieur du moteur tournant. Une température de combustion abaissée permet d'améliorer les performances du système de motorisation et, notamment dans le cas des systèmes de motorisation Diesel, de réduire la production de NOx, composés d'oxydes d'azote particulièrement polluants.

Pour abaisser la température de combustion, une technique développée dans les années 70 consiste à rediriger une partie des gaz d'échappement, inertes, vers l'entrée d'admission du mélange combustible-air du moteur. Une vanne EGR (pour Exhaust gaz recirculation) à débit variable est positionnée sur le circuit de recirculation entre la sortie d'échappement et l'entrée d'admission ; le taux d'ouverture de la vanne est piloté par un calculateur du véhicule, en fonction de paramètres du système de motorisation tels qu'une température mesurée des gaz d'échappement, une puissance demandée au moteur, ... La production d'oxydes d'azote dépendant notamment de la température et de la présence d'oxygène pendant la combustion, l'introduction de gaz brûlés agit sur les deux paramètres (température et proportion d'oxygène).

Si diminuer la température de combustion permet de diminuer à moindre frais la production de NOx et d'augmenter les performances du système de motorisation, elle présente des inconvénients.

La combustion au sein du moteur est moindre (entre autres à cause de la teneur réduite en oxygène), elle génère ainsi plus d'hydrocarbures imbrûlés et donc plus de particules et de suies. Ce qui a notamment pour conséquence d'encrasser le circuit d'admission de gaz, le circuit d'échappement des gaz brûlés et le circuit de recirculation des gaz d'échappement. Des résidus solides de charbon (encore appelés coke ou calamine) en quantité considérable se forment ainsi dans le collecteur d'admission, le turbocompresseur et la vanne de régulation EGR, parfois à un point tel que des messages de défaut du moteur et autres peuvent survenir. La vanne de régulation EGR peut aussi rester bloquée en position ouverte, ce qui fait qu'à pleine charge, une grande quantité de gaz d'échappement est mêlée à l'air de combustion. On observe alors, dans le cas d'un véhicule automobile, un panache de fumée noire et une perte de puissance lorsque le véhicule accélère. Ainsi, la combustion à basse température diminue le rendement du système de motorisation et augmente la pollution générée par le système de motorisation.

Une technique connue pour nettoyer le système de motorisation et ses circuits consiste à injecter un fluide nettoyant tel qu'un mélange gazeux d'hydrogène et d'oxygène dans le circuit d'admission pendant que le moteur tourne. L'oxydation de l'hydrogène améliore la combustion qui génère de la vapeur d'eau et du gaz carbonique ; à haute température, la vapeur d'eau et le gaz carbonique réagissent avec la calamine et permettent ainsi l'élimination de la calamine. La demande de brevet FR 15/02059 du même déposant décrit une installation pour la mise en œuvre de cette technique.

### Description de l'invention

L'invention vise à améliorer l'efficacité d'une installation connue de nettoyage d'un système de motorisation ; le système de motorisation comprend un moteur à combustion interne et un circuit de circulation de gaz ; le moteur comprenant une pluralité d'entrées destinées à recevoir des produits à brûler et une sortie de gaz d'échappement ; le circuit de circulation des gaz comprend une pluralité de conduites et une pluralité de pièces mobiles agencées ensemble pour amener sur une des entrées du moteur un mélange gazeux approprié.

L'installation de nettoyage selon l'invention est du type comprenant un dispositif d'injection agencé pour injecter un fluide nettoyant sur une des entrées du moteur.

L'installation selon l'invention est caractérisée en ce qu'elle comprend également un moyen de diagnostic adapté pour déterminer un taux d'encrassement du système de motorisation en fonction de paramètres intrinsèques du système de motorisation et un moyen de commande du dispositif d'injection adapté pour piloter le dispositif d'injection en fonction du taux d'encrassement du système de motorisation.

Ainsi, l'injection de fluide est ajustée en tenant compte d'un taux d'encrassement du système de motorisation dépendant de paramètres intrinsèques du système de motorisation, comme par exemple la géométrie du moteur, le nombre et le diamètre des cylindres, ..., pour une meilleure efficacité du nettoyage.

De préférence, le moyen de diagnostic est adapté pour déterminer le taux d'encrassement du système de motorisation en fonction des paramètres intrinsèques du système de motorisation et de conditions d'utilisation du dit système de motorisation, pour améliorer encore l'efficacité du nettoyage. Les paramètres liés aux conditions d'utilisation du système de motorisation seront détaillés plus loin.

Dans une installation selon l'invention, le moyen de commande est adapté pour :
- en fonction du taux d'encrassement du système de motorisation, déterminer des paramètres de nettoyage d'une séquence de nettoyage comprenant une pluralité de cycles de nettoyage, les dits paramètres de nettoyage comprenant notamment pour chaque cycle une durée du dit cycle de nettoyage et / ou une quantité de fluide à injecter pendant le dit cycle de nettoyage, et
- transmettre les paramètres de nettoyage déterminés au dispositif d'injection pour la mise en œuvre de la séquence de nettoyage associée au taux d'encrassement.

Les paramètres d'une séquence de nettoyage sont ainsi bien adaptés au système de motorisation à traiter, en tenant compte éventuellement en complément de l'état général du système de motorisation, le dit état dépendant de l'usage qui en a été fait.

Les paramètres d'une séquence de nettoyage peuvent comprendre un nombre de cycles de nettoyage. Ils peuvent également comprendre pour chaque cycle de nettoyage :
- une température et / ou une pression du fluide injecté, et / ou
- un débit de fluide à injecter, et / ou
- une composition du fluide à injecter, notamment une proportion d'hydrogène, et/ou
- une durée du cycle de nettoyage.

Ainsi pour les systèmes de motorisation les plus encrassés, la séquence de nettoyage peut comprendre plusieurs cycles ayant éventuellement des paramètres différents, par exemple des paramètres de durée de cycle et / ou de quantité de fluide à injecter différents. La détermination initiale du taux d'encrassement du système de motorisation à nettoyer permet d'optimiser les paramètres des différents cycles.

Enfin, dans l'installation selon l'invention, le moyen de commande peut également être adapté pour déterminer, en fonction des paramètres intrinsèques et des conditions d'utilisation du système de motorisation, une durée d'utilisation prédictive à partir de laquelle un prochain nettoyage est souhaitable. Selon le système de motorisation, la durée d'utilisation pourra être définie par un nombre d'heures de fonctionnement ou un nombre de kilomètres parcourus. Ceci permet de programmer pour le futur un nettoyage préventif du système de motorisation, avant que l'encrassement du système de motorisation entraîne une baisse de performance et une augmentation de la pollution générée par le système de motorisation.

### Brève description des figures

L'invention sera mieux comprise, et d'autres caractéristiques et avantages de l'invention apparaîtront à la lumière de la description qui suit d'exemples de réalisation d'une installation de nettoyage d'un système de motorisation selon l'invention. Ces exemples sont donnés à titre non limitatif. La description est à lire en relation avec le dessin annexé dans lequel :

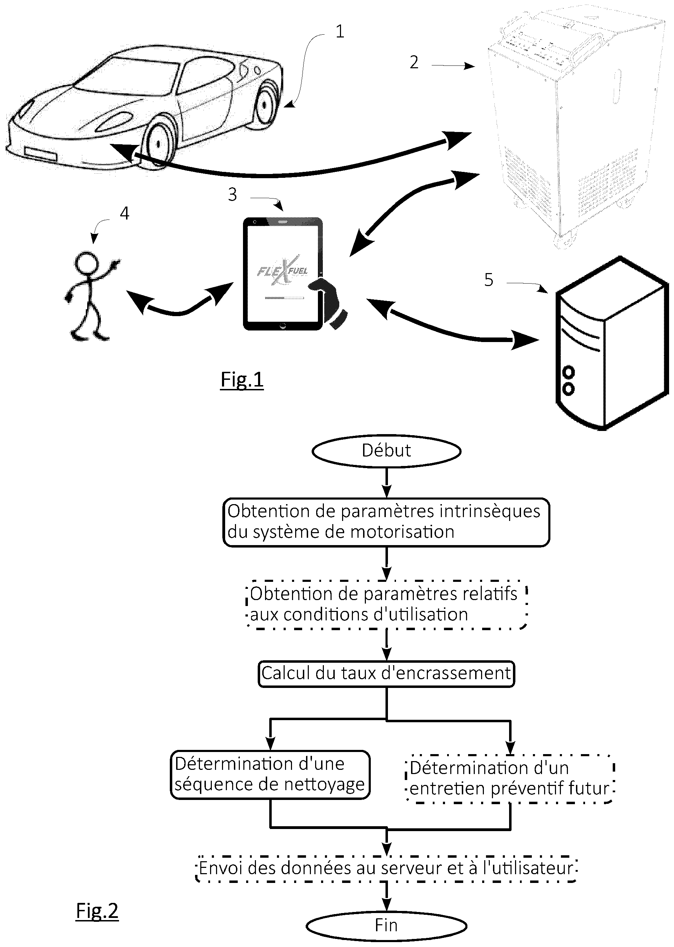

- la figure 1 est une vue d'ensemble d'une installation selon l'invention dans son environnement de fonctionnement, et
- la figure 2 est un schéma décrivant un mode de fonctionnement d'une installation selon la figure 1.

### Description d'un mode de réalisation de l'invention

Comme dit précédemment, l'installation selon l'invention est une installation de nettoyage d'un système de motorisation comprenant un système de motorisation 1 à combustion interne et un circuit de circulation de gaz.

De manière connue, le moteur comprend une pluralité d'entrées destinées à recevoir des produits à brûler et une sortie de gaz d'échappement ; le circuit de circulation des gaz comprend quant à lui une pluralité de conduites et une pluralité de pièces mobiles agencées ensemble pour amener sur une des entrées du moteur un mélange gazeux approprié. Selon un mode de réalisation, le moteur comprend une unique entrée, adaptée à recevoir un mélange gazeux contenant notamment de l'air, du combustible, et éventuellement une partie des gaz d'échappement. Selon un autre mode de réalisation, le moteur comprend au moins deux entrées, une entrée destinée à recevoir un mélange gazeux contenant notamment de l'air et éventuellement une partie des gaz d'échappement, et une entrée destinée à recevoir du combustible (moteur dit à injection directe).

Les pièces mobiles comprennent notamment un clapet d'admission permettant de réguler la quantité de mélange gazeux injecté dans le moteur par l'entrée destinée à recevoir les gaz, communément appelée entrée d'admission. Un calculateur du système de motorisation pilote les mouvements des pièces mobiles du système de motorisation, notamment le taux d'ouverture du clapet d'admission en fonction des performances attendues du système de motorisation. Au fil du temps et de l'utilisation du moteur, des dépôts de suies viennent progressivement limiter les mouvements des pièces mobiles et la section utile des conduites d'amenée de gaz dans le moteur.

L'installation de nettoyage comprend un dispositif d'injection agencé pour injecter un fluide nettoyant sur une des entrées du moteur. Dans un exemple mis en œuvre, le fluide nettoyant est un mélange d'hydrogène et d'oxygène et l'installation est complètement autonome en ce sens qu'elle produit elle-même le fluide nettoyant qu'elle utilise. A cet effet, l'installation comprend, dans une structure 2 en forme de caisson, un réservoir d'eau et des moyens connus par ailleurs pour produire de l'hydrogène et de l'oxygène par un procédé d'électrolyse de l'eau. L'installation comprend également un dispositif d'injection de fluide agencé pour injecter le fluide nettoyant sur l'une des entrées du moteur à nettoyer. Si le moteur comprend une unique entrée adaptée à recevoir un mélange gazeux contenant notamment de l'air et du combustible, une sortie du dispositif d'injection de l'installation de nettoyage est reliée à la dite entrée, en amont de la soupape d'admission. Si le moteur comprend au moins deux entrées, la sortie du dispositif d'injection de l'installation de nettoyage peut être reliée soit à l'entrée destinée à recevoir un mélange gazeux contenant notamment de l'air soit à l'entrée destinée à recevoir du combustible (moteur dit à injection directe).

Une interface utilisateur 3 (encore appelée interface homme/machine ou interface H/M) permet à l'utilisateur 4 de régler l'installation, d'entrer des paramètres nécessaires au fonctionnement de l'installation (notamment des informations sur le véhicule à nettoyer), de déclencher une séquence de nettoyage, d'être informé de l'état d'avancement d'une séquence de nettoyage en cours, .... L'interface utilisateur comprend notamment un écran d'affichage d'information, un moyen pour transmettre des informations à l'installation de nettoyage et un moyen de sélectionner une information affichée à un instant donné sur l'écran. Selon un mode de réalisation, l'interface utilisateur peut être positionnée sur la structure (le caisson) de l'installation de nettoyage, et le moyen de sélection est par exemple une souris permettant le déplacement d'un curseur sur l'écran, une couche tactile recouvrant l'écran d'affichage, etc. Selon un autre mode de réalisation, l'interface utilisateur peut être un dispositif électronique tel qu'un smartphone, une tablette tactile ou un ordinateur portable relié à la structure par une liaison de préférence sans fil.

Plus particulièrement dans le cadre de l'invention, l'installation comprend également un moyen de diagnostic d'un système de motorisation et un moyen de commande du dispositif d'injection pour la mise en œuvre d'un traitement du système de motorisation adapté au diagnostic réalisé.

D'un point de vue réalisation pratique, dans l'exemple mis en œuvre, le moyen de diagnostic et le moyen de commande sont constitués d'un microprocesseur associé à une mémoire de programme ; le microprocesseur et la mémoire de programme peuvent être installés dans la structure (caisson) de l'installation selon l'invention, ou dans l'interface utilisateur distante. Le microprocesseur est susceptible d'être connecté au calculateur pilotant le fonctionnement global du système de motorisation à nettoyer et notamment les mouvements des pièces mobiles. Le microprocesseur est également connecté au dispositif d'injection dont il pilote le fonctionnement. Le microprocesseur est également susceptible d'être connecté à une base de données des caractéristiques techniques d'une pluralité de systèmes de motorisation. La base de données est stockée dans une mémoire de données, dans l'installation de nettoyage, dans l'interface utilisateur distante ou sur un serveur 5 de données distant.

La mémoire de programme mémorise un programme exécutable par le microprocesseur ; le dit programme comprend une pluralité de lignes de codes appropriées pour la mise en œuvre des fonctions techniques du moyen de diagnostic et des fonctions du moyen de commande dans le cadre de l'invention.

Le moyen de diagnostic selon l'invention est adapté pour déterminer le taux d'encrassement du système de motorisation en fonction de paramètres intrinsèques du système de motorisation ; dans l'exemple mis en œuvre, le moyen de diagnostic prend également en compte des paramètres relatifs à des conditions d'utilisation du dit système de motorisation.

Parmi les paramètres intrinsèques du système de motorisation et les paramètres relatifs aux conditions d'utilisation du dit système de motorisation , sont susceptibles d'être pris en compte :
- les paramètres intrinsèques au moteur tels que la géométrie du moteur, la cylindrée du moteur, le nombre de cylindres, le volume d'un cylindre, le type de combustible ...
- le débit d'air, le débit de gaz d'échappement admis dans un cylindre en fonctionnement nominal,
- les paramètres intrinsèques des systèmes de dépollution associés au système de motorisation (par exemple un circuit de recirculation des gaz d'échappement avec vanne EGR /ou un filtre à particules FAP)
- les paramètres intrinsèques du turbocompresseur.

Les paramètres intrinsèques du système de motorisation peuvent être fournis par un utilisateur de l'installation, avant de déclencher un diagnostic puis un nettoyage. En variante, le moyen de diagnostic a accès à la base de données de systèmes de motorisation mémorisant, pour chaque système de motorisation identifié par une référence unique, l'ensemble des paramètres fournis par le constructeur du dit système de motorisation. Dans ce cas, l'utilisateur sélectionne simplement la référence du système de motorisation dans la base de données pour transmettre l'ensemble des paramètres du système de motorisation au moyen de diagnostic.

Parmi les paramètres relatifs aux conditions d'utilisation du système de motorisation, sont susceptibles d'être pris en compte notamment :
- une durée d'utilisation du système de motorisation, durée définie par exemple par un nombre de kilomètres parcourus par le véhicule dans leuel le système de motorisation est installé, un nombre d'heures de travail effectuées par une machine industrielle dans laquelle le système de motorisation est installé, ...,
- une date de mise en fonctionnement du système de motorisation (ou date de mise en circulation du véhicule,
- un coefficient de pondération déterminé en fonction d'une situation usuelle dans laquelle le système de motorisation est utilisé le plus souvent (par exemple pour un véhicule, utilisation en ville, sur route, autoroute, mixte),
- un coefficient de pondération déterminé en fonction du type de combustible utilisé avec le système de motorisation,
- un coefficient de pondération déterminé en fonction d'un éventuel additif ajouté au combustible du système de motorisation en vue de limiter son taux d'encrassement, ...

Des paramètres tels que les coefficients de pondération sont fournis par l'utilisateur. Un paramètre tel que la durée d'utilisation du système de motorisation à nettoyer peut être fourni par l'utilisateur via l'interface H/M après lecture d'un nombre d'heures ou de kilomètres affiché sur un compteur associé au système de motorisation. En variante, la durée d'utilisation peut être transférée directement au moyen de diagnostic par un dispositif de transfert de données couplé à un compteur d'heures ou de kilomètres associé au système de motorisation ou couplé, dans le cas d'un véhicule, au système OBD (On Board Diagnostic) du dit véhicule.

Le coefficient de pondération fonction d'une situation usuelle dans laquelle le système de motorisation est utilisé le plus souvent est par exemple déterminé à partir d'une table d'états associant un coefficient de pondération à chaque valeur qualitative d'un ensemble de valeurs qualitatives représentatives des situations d'utilisation possibles du système de motorisation. Le choix d'une valeur qualitative dans l'ensemble de valeurs qualitatives est par exemple fait manuellement par l'utilisateur via l'interface utilisateur. Le moyen de diagnostic donne ensuite une valeur au coefficient de pondération en fonction de la valeur qualitative sélectionnée.

Par exemple, pour un véhicule dit « léger » tel qu'une voiture à usage personnel ou un petit véhicule utilitaire, trois situations usuelles de roulage peuvent être définies par l'ensemble suivant de quatre valeurs qualitatives : {URBAIN, ROUTIER, AUTOROUTIER, MIXTE}. La valeur « URBAIN » est choisie lorsque le véhicule est utilisé le plus souvent en milieu urbain ; un tel usage se caractérise par des variations de vitesse et de régime moteur très fréquentes, rapides et d'amplitudes plutôt importantes, entraînant un encrassement important du système de motorisation. La valeur « ROUTIER » est choisie lorsque le véhicule est utilisé le plus souvent sur route et hors agglomération urbaine ; un tel usage se caractérise par une vitesse et un régime moteur plus stables, avec des changements de vitesse ou de régime moteur moins fréquents et moins rapides, se traduisant par un encrassement moyen du système de motorisation.

La valeur « AUTOROUTE » est choisie lorsque le véhicule est utilisé le plus souvent sur autoroute et hors agglomération urbaine ; un tel usage se caractérise par une vitesse et un régime moteur plus stables et des vitesses plus importantes, se traduisant par un faible encrassement du système de motorisation. La valeur « MIXTE » est choisie lorsque le véhicule est utilisé à la fois en agglomération et hors agglomération. A titre d'exemple, la table d'états peut être la suivante :
- valeur qualitative AUTOROUTIER ROUTIER MIXTE URBAIN
- coefficient de pondération lié à l'usage 0,25 0,35 0,5 0,75

Le coefficient de pondération lié à l'usage peut être affiné en augmentant le nombre de valeurs qualitatives et en définissant avec plus de précision le coefficient de pondération lié à chaque valeur qualitative.

Le moyen de commande du dispositif d'injection est adapté pour piloter le dispositif d'injection en fonction d'un taux d'encrassement du système de motorisation. Plus précisément, en fonction du taux d'encrassement du système de motorisation, le moyen de commande détermine une séquence de nettoyage appropriée au taux d'encrassement du système de motorisation et transmet au dispositif de nettoyage des signaux de commande appropriés pour mettre en œuvre la séquence de nettoyage déterminée.

Une séquence de nettoyage comprend au moins un cycle de nettoyage défini notamment par une durée d'injection de fluide nettoyant et / ou une quantité de fluide à injecter. En option, un cycle de nettoyage peut être précisé par des paramètres complémentaires comme par exemple une température et / ou une pression du fluide injecté et / ou une composition du fluide à injecter (proportion d'hydrogène, ...). Une séquence de nettoyage peut encore comprendre plusieurs cycles, chaque cycle de nettoyage pouvant être caractérisés par des paramètres de nettoyage différents d'un cycle à l'autre.

A titre d'exemple, pour un système de motorisation de véhicule moyennement encrassé, ayant un taux d'encrassement de l'ordre de 50 à 70 %, une séquence de nettoyage pourra comprendre un seul cycle, avec une durée de cycle de l'ordre de 30 mn à 4H, un débit de fluide de l'ordre de 250 l/h à 1000 l/h , le fluide étant un mélange stœchiométrique gazeux d'hydrogène et d'oxygène.

Dans un autre exemple, pour un système de motorisation plus fortement encrassé, ayant un taux d'encrassement de l'ordre de 70 à 90 %, une séquence de nettoyage pourra comprendre plusieurs cycles, avec des durées de cycles et des débits de fluide qui augmentent au fil de la réalisation des cycles. Le premier cycle permettra d'enlever les suies déposées les dernières donc les moins accrochées, les cycles suivants s'attaqueront aux suies les plus anciennes, plus fortement accrochées aux parois de la vanne EGR, des cylindres, ...

En option, le moyen de commande peut également être adapté pour déterminer, en fonction des paramètres intrinsèques et des conditions d'utilisation du système de motorisation, une durée d'utilisation à partir duquel un prochain nettoyage est souhaitable, en vue d'une maintenance préventive. Ceci peut être effectué après la détermination du taux d'encrassement, avant, pendant ou après la séquence de nettoyage. L'information peut être affichée sur l'interface utilisateur par exemple.

### NOMENCLATURE

1 : Véhicule
2 : Installation de nettoyage
3 : Interface Homme/Machine
4 : Utilisateur
5 : Serveur

Les flèches en traits épais montrent les flux de données entre les différentes entités (véhicule, installation de nettoyage, utilisateur, serveur) participant à la mise en œuvre du procédé selon l'invention

## Revendications

1. Installation de nettoyage (2) d'un système de motorisation ledit système de motorisation comprenant un moteur à combustior interne et un circuit de circulation de gaz, le moteur comprenant une pluralité d'entrées destinées à recevoir des produits à brûler et une sortie de gaz d'échappement, le circuit de circulation des gaz comprenant une pluralité de conduites et une pluralité de pièces mobiles agencées ensemble pour amener sur une des entrées du moteur un mélange gazeux approprié à la combustion, l'installation de nettoyage comprenant un dispositif d'injection agencé pour injecter un fluide nettoyant sur une des entrées du moteur, l'installation **caractérisée en ce qu'**elle comprend également un moyen de diagnostic adapté pour déterminer un taux d'encrassement du système de motorisation en fonction de paramètres intrinsèques du système de motorisation et un moyen de commande du dispositif d'injection adapté pour fournir au dispositif d'injection des paramètres de nettoyage fonction du taux d'encrassement du système de motorisation.

2. Installation (2) selon la revendication 1 dans laquelle le moyen de diagnostic est adapté pour déterminer le taux d'encrassement du système de motorisation en fonction des paramètres intrinsèques du système de motorisation et de paramètres relatifs à des conditions d'utilisation du dit système de motorisation.

3. Installation (2) selon la revendication 2 dans laquelle les paramètres relatifs aux conditions d'utilisation du système de motorisation comprennent :
• une durée d'utilisation du système de motorisation et / ou
• un nombre d'heures d'utilisation et / ou
• un nombre de kilomètres parcourus et / ou
• une distance parcourue.

4. Installation (2) selon l'une des revendications 2 ou 3 dans laquelle les paramètres relatifs aux conditions d'utilisation du système de motorisation comprennent un coefficient de pondération déterminé par une table d'état associant un coefficient de pondération à chaque valeur qualitative d'un ensemble de valeurs qualitatives représentatives des situations d'utilisation possibles du système de motorisation.

5. Installation (2) selon la revendication 4 dans laquelle, pour le nettoyage d'un système de motorisation de véhicule , l'ensemble des valeurs qualitatives représentatives des situations d'utilisation possibles du véhicule est défini par : { URBAIN, ROUTIER, AUTOROUTIER, MIXTE}.

6. Installation (2) selon l'une des revendications précédentes dans laquelle le moyen de commande est adapté pour :
• en fonction du taux d'encrassement du système de motorisation, déterminer des paramètres de nettoyage d'une séquence de nettoyage comprenant une pluralité de cycles de nettoyage, les dits paramètres de nettoyage comprenant notamment pour chaque cycle une durée du dit cycle de nettoyage et / ou une quantité de fluide à injecter pendant le dit cycle de nettoyage, et
• transmettre les paramètres de nettoyage déterminés au dispositif d'injection pour la mise en œuvre de la séquence de nettoyage associée au taux d'encrassement.

7. Installation (2) selon la revendication 6 dans laquelle les paramètres de nettoyage comprennent un nombre de cycles de nettoyage.

8. Installation (2) selon la revendication 6 ou 7 dans laquelle les paramètres de nettoyage comprennent également, pour chaque cycle de nettoyage :
• une température et / ou une pression du fluide injecté, et / ou
• une composition du fluide à injecter, notamment une proportion d'hydrogène.

9. Installation (2) selon l'une des revendications 2 à 8, dans laquelle le moyen de commande est également adapté pour déterminer, en fonction des paramètres intrinsèques et des conditions d'utilisation du système de motorisation, une durée d'utilisation du système de motorisation à partir de laquelle un prochain nettoyage est souhaitable.

## Patentansprüche

1. Reinigungsanlage (2) eines Antriebssystems, wobei das Antriebssystem einen Verbrennungsmotor und einen Gaszirkulationskreislauf beinhaltet, wobei der Motor eine Vielzahl von Einlässen, die dazu bestimmt sind, zu verbrennende Produkte aufzunehmen, und einen Abgasauslass beinhaltet, wobei der Gaszirkulationskreislauf eine Vielzahl von Leitungen und eine Vielzahl von beweglichen Teilen beinhaltet, die gemeinsam dazu angeordnet sind, ein für die Verbrennung geeignetes Gasgemisch zu einem der Einlässe des Motors zu führen, wobei die Reinigungsanlage eine Einspritzvorrichtung beinhaltet, die dazu angeordnet ist, ein Reinigungsfluid in einen der Einlässe des Motors einzuspritzen, wobei die Anlage **dadurch gekennzeichnet ist, dass** sie ferner Folgendes beinhaltet: ein Diagnosemittel, das dazu angepasst ist, einen Verschmutzungsgrad des Antriebssystems in Abhängigkeit von inhärenten Parametern des Antriebssystems zu bestimmen, und ein Steuermittel der Einspritzvorrichtung, das dazu angepasst ist, der Einspritzvorrichtung Reinigungsparameter in Abhängigkeit von dem Verschmutzungsgrad des Antriebssystems bereitzustellen.

2. Anlage (2) nach Anspruch 1, wobei das Diagnosemittel dazu angepasst ist, den Verschmutzungsgrad des Antriebssystems in Abhängigkeit von den inhärenten Parametern des Antriebssystems und von Parametern in Bezug auf Nutzungsbedingungen des Antriebssystems zu bestimmen.

3. Anlage (2) nach Anspruch 2, wobei die Parameter in Bezug auf die Nutzungsbedingungen des Antriebssystems Folgendes beinhalten:
• eine Nutzungsdauer des Antriebssystems und/oder
• eine Anzahl von Nutzungsstunden und/oder
• eine Anzahl von zurückgelegten Kilometern und/oder
• eine zurückgelegte Strecke.

4. Anlage (2) nach einem der Ansprüche 2 oder 3, wobei die Parameter in Bezug auf die Nutzungsbedingungen des Antriebssystems einen Gewichtungskoeffizienten beinhalten, der anhand einer Zustandstabelle bestimmt wird, die jedem qualitativen Wert einer Gesamtheit von qualitativen Werten, die für die möglichen Nutzungssituationen des Antriebssystems repräsentativ sind, einen Gewichtungskoeffizienten zuordnet.

5. Anlage (2) nach Anspruch 4, wobei für die Reinigung eines Fahrzeugantriebssystems die Gesamtheit der qualitativen Werte, die für die möglichen Nutzungssituationen des Fahrzeugs repräsentativ sind, durch Folgendes definiert wird: {STADT, LANDSTRASSE, AUTOBAHN, GEMISCHT}.

6. Anlage (2) nach einem der vorhergehenden Ansprüche, wobei das Steuermittel zu Folgendem angepasst ist:
• in Abhängigkeit von dem Verschmutzungsgrad des Antriebssystems, Bestimmen von Reinigungsparametern einer Reinigungssequenz, die eine Vielzahl von Reinigungszyklen beinhaltet, wobei die Reinigungsparameter für jeden Zyklus insbesondere eine Dauer des Reinigungszyklus und/oder eine während des Reinigungszyklus einzuspritzende Fluidmenge beinhalten, und
• Übertragen der bestimmten Reinigungsparameter an die Einspritzvorrichtung zur Durchführung der Reinigungssequenz, die mit dem Verschmutzungsgrad assoziiert ist.

7. Anlage (2) nach Anspruch 6, wobei die Reinigungsparameter eine Anzahl von Reinigungszyklen beinhalten.

8. Anlage (2) nach Anspruch 6 oder 7, wobei die Reinigungsparameter für jeden Reinigungszyklus ferner Folgendes beinhalten:
• eine Temperatur und/oder einen Druck des eingespritzten Fluids und/oder
• eine Zusammensetzung des einzuspritzenden Fluids, insbesondere einen Wasserstoffanteil.

9. Anlage (2) nach einem der Ansprüche 2 bis 8, wobei das Steuermittel ferner dazu angepasst ist, in Abhängigkeit von den inhärenten Parametern und den Nutzungsbedingungen des Antriebssystems eine Nutzungsdauer des Antriebssystems zu bestimmen, nach deren Ablauf eine nächste Reinigung wünschenswert ist.

## Claims

1. Installation (2) for cleaning a drive system, said drive system comprising an internal combustion engine and a gas circulation circuit, the engine comprising a plurality of inlets configured for receiving products to be burned and an exhaust gas outlet, the gas circulation circuit comprising a plurality of pipes and a plurality of moving parts arranged together to feed to one of the inlets of the engine a gas mixture appropriate for the combustion, the cleaning installation comprising an injection device arranged to inject a cleaning fluid into one of the inlets of the engine, the installation being **characterized in that** it also comprises diagnostic means adapted to determine a level of soiling of the drive system as a function of intrinsic parameters of the drive system and control means for the injection device adapted to supply to the injection device cleaning parameters as a function of the level of soiling of the drive system.

2. Installation (2) according to Claim 1, in which the diagnostic means is adapted to determine the level of soiling of the drive system as a function of the intrinsic parameters of the drive system and as a function of parameters relating to conditions of use of said drive system.

3. Installation (2) according to Claim 2, in which the parameters relating to the conditions of use of the drive system comprise:
• a duration of use of the drive system and/or
• a number of hours of use and/or
• a number of kilometres travelled and/or
• a distance travelled.

4. Installation (2) according to either one of Claims 2 and 3, in which the parameters relating to the conditions of use of the drive system comprise a weighting coefficient determined by a state table associating a weighting coefficient with each qualitative value of a set of qualitative values representative of the possible situations of use of the drive system.

5. Installation (2) according to Claim 4, in which, for the cleaning of a drive system of a vehicle, all of the qualitative values representative of possible situations of use of the vehicle are defined as follows: {URBAN, ROAD, MOTORWAY, MIXED}.

6. Installation (2) according to any one of the preceding claims, in which the control means is adapted:
• as a function of the level of soiling of the drive system, to determine cleaning parameters of a cleaning sequence comprising a plurality of cleaning cycles, said cleaning parameters comprising in particular for each cycle a duration of said cleaning cycle and/or a quantity of fluid to be injected during said cleaning cycle, and
• to transmit the cleaning parameters determined to the injection device for the execution of the cleaning sequence associated with the level of soiling.

7. Installation (2) according to Claim 6, in which the cleaning parameters comprise a number of cleaning cycles.

8. Installation (2) according to Claim 6 or 7 in which the cleaning parameters also include, for each cleaning cycle:
• a temperature and/or a pressure of the injected fluid, and/or
• a composition of the fluid to be injected, in particular a proportion of hydrogen.

9. Installation (2) according to any one of Claims 2 to 8, in which the control means is also adapted to determine, as a function of the intrinsic parameters and the conditions of use of the drive system, a duration of use of the drive system from which the next cleaning is desirable.
